# FASCICULE DE BREVET EUROPEEN

(11) **EP 2 499 865 B1**
(45) Date de publication et mention de la délivrance du brevet: **17.06.2015**
(21) Numéro de dépôt: 10795430.7
(22) Date de dépôt: 15.11.2010
(51) Int. Cl.: H04W 52/02

(54) **PROCEDE DE MISE EN SOMMEIL D'AU MOINS UN COMPOSANT D'UNE ENTITE D'UN RESEAU DE COMMUNICATION, DISPOSITIF ET PROGRAMME D'ORDINATEUR CORRESPONDANTS**
VERFAHREN ZUR DEAKTIVIERUNG VON MINDESTENS EINER KOMPONENTE EINER EINHEIT EINES KOMMUNIKATIONSNETZES UND ZUGEHÖRIGES COMPUTERPROGRAMM SOWIE VORRICHTUNG
METHOD FOR DEACTIVATING AT LEAST ONE COMPONENT OF AN ENTITY OF A COMMUNICATION NETWORK, AND CORRESPONDING COMPUTER PROGRAM AND DEVICE

(30) Priorité: 13.11.2009 FR 0958003
(43) Date de publication de la demande: 19.09.2012
(73) Titulaire: Orange, 75015 Paris (FR)
(72) Inventeur: CHRISTIN, Philippe, F-35000 Rennes (FR); CARIOU, Laurent, F-35700 Rennes (FR); BERNARD, David, F-35560 Marcille Raoul (FR)
(74) Mandataire: Vidon Brevets & Stratégie
(86) Numéro de dépôt international: PCT/FR2010/052423
(87) Numéro de publication internationale: WO 2011/058283

(56) Documents cités:
- EP-A1- 1 684 465
- US-A1- 2005 009 578
- US-A1- 2005 025 080
- US-A1- 2005 174 927
- US-A1- 2006 045 035
- US-A1- 2006 072 614
- US-A1- 2007 058 575

## Description

### 1. DOMAINE DE L'INVENTION

L'invention se rapporte au domaine des communications électroniques et plus particulièrement au domaine des communications par voie radio, également appelées sans fil.

Dans ce type de communication, qui met souvent en oeuvre des entités de réception de communication nomades, fonctionnant notamment sur batterie, la notion de consommation d'énergie est un problème important pour ces entités. En effet, l'émission et la réception de signaux numériques sans fil sont grandement consommateurs d'énergie. Il est donc nécessaire de prévoir des mécanismes permettant d'économiser cette énergie au niveau du terminal de communication.

### 2. ART ANTERIEUR

Les équipements des réseaux de communication (émetteurs et récepteurs) mettent généralement en oeuvre le modèle OSI (de l'anglais Open Systems Interconnection, « Interconnexion de systèmes ouverts »), proposé par l'ISO (Organisation internationale de normalisation), qui décrit les fonctionnalités nécessaires à la communication entre deux entités d'un réseau informatique et l'organisation de ces fonctions, réparties selon une structure en couches, la couche la plus basse étant la couche de niveau « physique » (dite « couche physique »), en charge de l'émission et de la réception effective des signaux. Ces différentes fonctionnalités sont généralement mises en oeuvre par des composants spécifiques des entités de communication.

La couche physique s'interface avec la couche immédiatement supérieure (couche « liaison de données »), qui gère les communications entre deux machines adjacentes, directement reliées entre elles par un support physique, gràce à la sous-couche MAC (de l'anglais «Medium Access Control », pour « Contrôle d'accès au support physique »).

Dans le modèle OSI, chaque couche a un rôle bien défini pour les communications entre entités d'un réseau de communication, et chaque rôle est généralement mis en oeuvre par un ou plusieurs composants adaptés à cet effet. En particulier, la structure couche Physique/couche MAC des systèmes actuels, est parfaitement cloisonnée.

La couche physique définit des techniques visant à assurer la transmission de données à un débit fixé. Elle n'a aucune connaissance, en tant que telles, des données transportées.

La couche MAC définit des techniques visant à organiser la transmission des données des différents utilisateurs, à gérer l'accès au canal, les collisions, les acquittements et les retransmissions, et à identifier les entités de communication (les terminaux en particulier).

Ainsi, le rôle de la couche MAC est notamment de filtrer les trames reçues en ne gardant que celles qui lui sont destinées, en vérifiant leur adresse MAC de destination.

Des modes d'économie d'énergie, dits « power save », ont été définis, notamment par les normes 802.11 de l'IEEE (Institute of Electrical and Electronics Engineers), qui garantissent une interopérabilité entre des équipements de communication sans fil, et tout particulièrement entre des entités de communication sans fil de type WI-FI (de l'anglais Wireless Fidelity).

Il existe différents modes d'économie d'énergie. Par exemple, un mode appelé « Legacy power save » est basé sur l'échange de messages de signalisation (PS-Poll), envoyés avec des modulations faibles et sans priorité. Un tel mode d'économie d'énergie est de ce fait inadapté au trafic temps réel.

Il existe aussi un mode dit « APSD » (de l'anglais « Automatic Power Save Delivery ») introduit dans le norme 802.11 le et plus adapté au trafic de type VOIP (de l'anglais « Voice Over Inernet Protocol »), dans lequel la trame de donnée est envoyée avec une priorité relative au type de trafic, sans présence d'une trame de gestion supplémentaire.

Enfin, le mode dit « PSMP » (Power Save Multi Poll), introduit avec la norme 802.11n, prévoit qu'un point d'accès du réseau (appelé aussi « Access Point » dans la terminologie anglaise) réalise l'ordonnancement des périodes d'activité et de veille de chaque entité de communication (terminal) associée dans le BSS (de l'anglais « Basis Service Set », désignant un ensemble d'entités de communication synchronisées).

Le point d'accès informe une entité lorsque du trafic lui est destinée. Quand l'entité est en mode « actif », elle peut être dans un des trois états: « Standby », « Réception » ou « Transmission ».

L'idée de ces différents mécanismes est de créer des modes d'économie d'énergie pour les entités de réception mobiles en alternant des phases de veille (dans lesquelles l'énergie est économisée) et d'activité. Les différents protocoles et techniques cités définissent les échanges entre entités et point d'accès pour gérer ces différentes phases sans perdre de paquet: ils prévoient une mise en mémoire tampon des paquets pendant la phase de veille et une transmission ou une réception des paquets pendant la phase d'activité.

Dans tous ces mécanismes de l'art antérieur, la mise en veille d'une entité est commandée au niveau de la couche MAC, qui contrôle le mécanisme d'économie d'énergie, ou au niveau des couches supérieures. En effet, les échanges d'informations entre un point d'accès et une entité ne sont compris et analysés qu'à partir de la couche MAC. C'est donc à partir de celle-ci que l'on peut commander la mise en veille et l'activité de l'entité. Le document US 2007/058575 traite d'un procédé d'économie d'énergie selon lequel une adresse partielle d'une entité destinataire est insérée au niveau de la couche physique. Cette adresse partielle ne designe pas toujours de façon unique une entité.

### 3. EXPOSE DE L'INVENTION

L'invention ne présente pas ces inconvénients de l'art antérieur. En effet, l'invention concerne un procédé de mise en sommeil d'au moins un composant d'une entité (E1) d'un réseau de communication sans fil comprenant une pluralité d'entités, ledit réseau de communication étant organisé en une pluralité de couches de communication comprenant une couche physique (PHY).

Selon l'invention un tel procédé comprend, au niveau de ladite couche physique (PHY) :
- une étape de réception d'un entête (HEA) d'une trame de données (PPDU) extraite d'un signal physique en cours de réception ;
- une étape de décodage dudit entête (HEA) délivrant au moins une information représentative (IED) d'au moins une entité destinataire de ladite trame ;
- une étape de mise en sommeil d'au moins un composant de ladite entité (E1) réceptrice dudit entête (HEA) lorsque l'information représentative de ladite entité destinataire désigne une entité autre que ladite entité réceptrice (E1).

Ainsi, dans le cadre d'une mise en oeuvre au sein d'un réseau de communication sans fil, par exemple se conformant à l'une des normes IEEE 802.11, l'invention permet de ne pas continuer à recevoir et à décoder l'ensemble de la trame de données PPDU avant de constater que cette trame n'est pas destinée à l'entité. Ainsi, l'entité peut être mise en sommeil directement par la couche PHY, ce qui n'est pas possible avec les techniques de l'art antérieur dans lesquelles la décision de mettre en sommeil l'entité est prise au niveau de la couche MAC (après échanges de trame de contrôle).

Lorsque l'information représentative (IED) de l'entité destinataire de ladite trame indique que plusieurs des entités du réseau de communication sont destinataires de la trame, l'entité qui met en oeuvre le procédé de l'invention ne se met donc pas en sommeil. Un tel cas peut se produire lorsque l'on prend l'hypothèse de coder l'IED sur un octet, quand l'information représentative prend par exemple la valeur FF et désigne une transmission multicast ou broadcast.

Selon une caractéristique particulière de l'invention, le procédé comprend en outre une étape de calcul d'une durée de mise en sommeil en fonction d'au moins une information représentative d'un débit de transmission (RATE) et d'au moins une information représentative d'un volume de données (LENGTH) de ladite trame de données (PPDU) de la couche physique.

Ainsi, l'entité peut calculer de manière précise le temps durant lequel elle peut se mettre en sommeil et ainsi économiser l'énergie de manière optimisée. Lorsque ce temps est écoulé, l'entité se réveille pour revenir en état normal de réception de peut à nouveau recevoir l'entête de la trame suivante et recommencer l'analyse de l'IED.

Selon une caractéristique particulière de l'invention, ladite étape de mise en sommeil comprend une étape de coupure d'une alimentation électrique d'au moins un composant radio fréquence de ladite entité.

Ainsi, la décision de mise en sommeil de la couche physique est prise au niveau de la couche physique elle-même, indépendamment des couches supérieures, au contraire des techniques de l'art antérieur qui divulguent une mise en sommeil sur ordre de la couche MAC.

Selon une caractéristique particulière de l'invention, ladite étape de mise en sommeil comprend une étape de coupure d'une alimentation électrique d'une chaîne de réception et ou transmission de données de la couche physique.

Selon un autre aspect, l'invention concerne également un procédé d'émission d'une trame de données (PPDU) comprenant un entête (HEA), par une entité émettrice d'un réseau de communication sans fil comprenant une pluralité d'entités, ledit réseau de communication étant organisé en une pluralité de couches de communication comprenant une couche physique (PHY), comprenant une étape de construction de ladite trame de données.

Selon l'invention un tel procédé comprend, au niveau de ladite couche physique (PHY) :
- une étape de construction d'une information (IED) représentative d'au moins une entité destinataire de ladite trame ;
- une étape d'insertion de ladite information représentative (IED) au sein dudit entête (HEA) de ladite trame de données (PPDU), délivrant une trame modifiée ;
- une étape d'émission de ladite trame de données modifiée sur ledit réseau de communication sous la forme d'un signal numérique.

Ainsi, l'invention permet d'utiliser un entête existant de la trame de données PPDU pour insérer, par exemple par un codage orthogonal ou dans un nouveau champ, l'information représentative (IED) qui est utilisée par les terminaux auxquels cette information représentative est destinée. La mise en oeuvre de l'invention est compatible avec l'utilisation de matériels existants : en effet, elle n'affecte pas les terminaux (compatibles d'un standard) non modifiés puisqu'ils ignorent cette information.

Dans un autre mode de réalisation de l'invention, l'IED peut également être insérée dans un champ existant de l'entête.

Dans un mode particulier de réalisation de l'invention, ladite information représentative est insérée au niveau de la sous-couche PLCP de la couche physique. Cette sous couche correspond à un ensemble de champs spécifiques de la trame de données (PPDU).

Selon une caractéristique particulière de l'invention, ladite information représentative (IED) d'au moins une entité destinataire de ladite trame est insérée dans un champ de signalisation dudit entête.

Ainsi, la mise en oeuvre de l'invention est compatible avec l'utilisation de matériels existants : en effet, elle n'affecte pas les terminaux. (compatibles d'un standard) non modifiés puisqu'ils ignorent cette information.

Par exemple, ladite information représentative peut être insérée dans le champ Short Training Field (L-STF, HT-STF ou VHT-STF).

Le choix du champ où est inserée ladite information représentative dépend des entités constituant le réseau de communication et potentiellement réceptrices de la trame.

Ainsi, l'utilisation d'un champ proche du début de la trame, comme le champ L-SIG par exemple, offre l'avantage de permettre une économie d'énergie plus importante dans la mesure où l'étape de décodage mise en oeuvre par une entité réceptrice peut aboutir plus rapidement au décodage de l'information représentative.

L'utilisation du champ L-SIG n'est par contre adaptée que si l'ensemble des entités potentiellement réceptrices implémentent l'invention.

Le choix du champ HT-STF permet une comptabilité du procédé d'émission selon l'invention avec un réseau comportant des entités n'implémentant pas l'invention mais néanmoins conformes à la norme IEE 802.11n.

Selon une caractéristique particulière de l'invention, ladite étape d'insertion est réalisée par un codage orthogonal de ladite information représentative (IED) avec l'un des champs dudit entête (HEA) de ladite trame de données (PPDU).

Ainsi, dans ce mode de réalisation, l'étape d'insertion de l'IED dans la trame courante qui aboutit à une trame modifiée est mise en oeuvre grâce à un codage orthogonal permettant de transmettre dans un même champ prédéfini, une donnée conforme à la norme et l'IED.

Par exemple, pour insérer l'IED dans le champ L-SIG, le champ L-SIG de la trame courante et l'IED sont mixées grâce à une modulation orthogonale.

Ce mode de réalisation de l'invention par codage orthogonal offre l'avantage de permettre une insertion de l'IED par modulation avec un champ quelconque de la trame, comme par exemple les champs existants L-SIG ou HT-SIG ou encore un champ standardisé dans une évolution future d'une norme, comme le champ VHT-SIG.

Ainsi, la tramé codée comportant notamment la trame courante, une entité réceptrice de la trame codée n'implémentant pas l'invention n'est pas perturbée par l'insertion de l'information représentative dans un champ de signalisation dudit entête. Ce mode de mise en oeuvre du procédé d'émission selon l'invention offre donc l'avantage de ne pas impliquer de restriction quand à l'implémentation de l'invention par chaque entité constituant le réseau de communication.

Selon un autre aspect, l'invention concerne également une entité (E1) connectable à un réseau de communication sans fil comprenant une pluralité d'entités, ledit réseau de communication étant organisé en une pluralité de couches de communication comprenant une couche physique (PHY).

Selon l'invention, une telle entité comprend, au niveau d'une interface avec ladite couche physique (PHY) :
- des moyens de réception d'un entête (HEA) d'une trame de données (PPDU) ;
- des moyens de décodage dudit entête (HEA) délivrant au moins une information représentative (IED) d'au moins une entité destinataire de ladite trame ;
- des moyens de mise en sommeil de ladite entité (E1) réceptrice dudit entête (HEA) lorsque l'information représentative de ladite entité destinataire désigne une entité autre que ladite entité réceptrice (E1).

Ainsi, une entité implémentant l'invention peut, dès le décodage de l'information représentative, déterminer si la trame lui est ou non destinée et se mettre en sommeil pendant le temps d'occupation du support physique (signal et fréquence) par une trame qui ne lui est pas destinée. Ladite invention est en particulier adaptée à une utilisation par une entité implémentant en sus des modes d'économies d'énergie de type « power save » contrôlés par exemple par la couche MAC.

Selon un autre aspect, l'invention concerne également une entité (E1) connectable à un réseau de communication sans fil comprenant une pluralité d'entités, ledit réseau de communication étant organisé en une pluralité de couches de communication comprenant une couche physique (PHY).

Selon l'invention, ladite entité comprend, au niveau d'une interface avec ladite couche physique (PHY) :
- des moyens de construction d'une information (IED) représentative d'au moins une entité destinataire de ladite trame ;
- des moyens d'insertion de ladite information (IED) représentative au sein dudit entête (HEA) de ladite trame de données (PPDU) délivrant une trame modifiée ;
- des moyens d'émission de ladite trame de données modifiée sur ledit réseau de communication sous la forme d'un signal numérique.

L'entité peut comporter en outre des moyens de configuration, permettant de définir les moyens d'insertion à utiliser, selon les entités constituant le réseau de communication. De tels moyens de configuration peuvent par exemple être mis en oeuvre par un administrateur du réseau de communication.

Selon un autre aspect, l'invention concerne aussi un signal représentatif d'une trame de données (PPDU) émise sur la couche physique (PHY) d'un réseau de communication sans fil, ladite trame comprenant un entête (HEA),

Selon l'invention un tel signal comprend, au sein dudit entête (HEA) à destination d'un composant de traitement du signal de ladite couche physique, une information (IED) représentative d'au moins une entité destinataire de ladite trame.

Selon un autre aspect, l'invention concerne également un programme d'ordinateur caractérisé en ce qu'il comprend des instructions de code de programme pour la mise en oeuvre du procédé de mise en sommeil tel que décrit précédemment, lorsque ce programme est exécuté par un processeur.

Selon un autre aspect, l'invention concerne enfin un programme d'ordinateur caractérisé en ce qu'il comprend des instructions de code de programme pour la mise en oeuvre du procédé d'émission tel que décrit précédemment, lorsque ce programme est exécuté par un processeur.

### 4. LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels:
- la figure 1 présente un schéma illustrant les étapes du procédé de mise en sommeil selon un mode de réalisation particulier de l'invention ;
- la figure 2 représente une entité adaptée à la mise en oeuvre du procédé de mise en sommeil selon l'invention ;
- la figure 3 représente une entité adaptée à la mise en oeuvre du procédé d'émission selon l'invention.

### 5. DESCRIPTION D'UN MODE DE REALISATION DE

### L'INVENTION

### 5.1 Principe général

L'invention concerne un procédé de mise en sommeil (ou « deactivation » selon la terminologie anglaise) d'au moins un composant d'une entité d'un réseau de communication sans fil organisé en une pluralité de couches de communication comprenant une couche physique, ce réseau comprenant plusieurs entités, par exemple des points d'accès ou des terminaux de communication.

Dans les systèmes de communication sans fil de l'art antérieur, la couche physique gère toutes les transmissions de manière identique, que ce soit des flux unicast, multicast ou broadcast et quel que soit le ou les destinataire(s) de la trame.

L'invention propose au contraire un traitement différent des trames en réception par la couche physique, selon qu'elles concernent ou non l'entité réceptrice.

Comme exposé plus loin, le procédé selon l'invention comprend, au niveau de ladite couche physique:
- une étape de réception d'un entête d'une trame de données extraite d'un signal physique pendant sa réception ;
- une étape de décodage de cet entête, sans attendre la réception de l'ensemble de la trame, de façon à obtenir au moins une information représentative (IED) de l'entité destinataire de la trame ou d'un ensemble d'entités destinataires, s'il s'agit d'une diffusion multi-points;
- une étape de mise en sommeil d'au moins un des composants de l'entité réceptrice de l'entête, lorsque l'entité réceptrice n'est pas destinataire de la trame en cours de réception, c'est à dire lorsque l'information représentative de ladite entité destinataire (IED) désigne une entité autre que l'entité réceptrice.

Ainsi, le procédé de l'invention permet de coder, au niveau de l'entête d'une trame de la couche physique, le type de transmission (unicast, broadcast ou multicast) et une information représentative de l'entité destinataire de la trame (IED). De cette façon, l'entité réceptrice, notamment un terminal ou un point d'accès d'un BSS, peut détecter dès le décodage de l'entête de la trame de la couche physique si cette trame lui est destinée au pas, sans avoir à attendre la fin de la réception des données et leur décodage par les couches supérieures à la couche physique (couche MAC ou IP notamment). En conséquence, il est ensuite possible à l'entité réceptrice de se mettre en sommeil, c'est à dire par exemple de couper l'alimentation électrique d'un composant ou de réaliser une coupure de l'alimentation électrique des composants de l'ensemble de la chaîne de réception de données, par exemple pendant la durée de transmission des données non utiles qui suivent cette entête. La mise en sommeil peut également consister en une coupure générale de l'alimentation électrique de l'ensemble des composants de l'entité.

Ainsi, l'invention permet de pallier les inconvénients de l'art antérieur et notamment permet à un équipement de communication sans fil de ne pas décoder l'ensemble des données d'une trame de la couche physique qu'il reçoit si elles ne lui sont pas destinées, et de réaliser ainsi des économies d'énergie appréciables par rapport aux solutions de l'art antérieur.

En effet, l'un des inconvénients majeurs des solutions de l'art antérieur est que l'identification de l'équipement destinataire est faite par la couche MAC et donc seulement lorsque les premières données permettant d'identifier le terminal destinataire ont été reçues, plus précisément après la réception de l'ensemble de la structure de données de niveau MAC, ce qui représente un gaspillage d'énergie important dans le cas où les données reçues ne concernent pas l'entité réceptrice.

De plus, la solution apportée par l'invention offre l'avantage d'être, selon au moins un mode de réalisation, transparente à un équipement ne mettant pas en oeuvre de l'invention, permettant ainsi une interopérabilité entre des équipements mettant en oeuvre l'invention et un autre équipement, par exemple un équipement sans fil respectant simplement une des normes 802.11x.

### 5.2. Identification du destinataire au niveau de la couche physique

Dans un mode de réalisation spécifique, l'invention propose d'ajouter une information dans l'entête de chaque trame en couche physique, par exemple dans l'entête de la sous-couche PLCP (de l'anglais « Physical Layer Convegence Procédure ») de la couche physique.

Dans l'organisation des systèmes de communication en réseau de l'art antérieur, et plus particulièrement au niveau des normes 802.11, cette sous-couche PLCP ne possède que des fonctionnalités de synchronisation, d'estimation de canal, et de paramétrage des techniques physiques utilisées.

Selon un mode de réalisation particulier, l'invention propose une nouvelle implémentation de la couche PLCP dont les fonctionnalités sont enrichies, pour comporter l'identification du type de transmission (unicast ou broadcast/multicast) et l'identification des entités destinataires.

### 5.3 Codage d'une information représentative de l'entité destinataire de la trame (IED).

Selon l'invention, une IED peut notamment tenir compte de deux paramètres de la couche MAC : l'AID (de l'anglais « Association Identifier ») de l'entité destinataire et le BSSID (de l'anglais « Basic Service Set Identifier »), permettant respectivement l'identification de l'entité (c'est-à-dire du terminal) et du BSS dont il fait partie.

Dans certains modes particuliers de réalisation de l'invention, l'identification du destinataire, c'est-à-dire l'IED, peut être codée sur deux octets.

Pour garantir l'unicité de ce codage, ces modes de réalisation peuvent comprendre l'utilisation d'une fonction de hachage.

Par exemple, le codage d'une IED sur deux octets peut être le résultat d'une fonction de hachage sur les paramètres AID (2 octets) et BSSID (6 octets) de la couche MAC, une valeur fixe (par exemple « FF FF») étant réservée pour les transmissions broadcast ou multicast ou lorsque les paramètres AID et BSSID ne sont pas encore connus.

Le paramètre AID permet d'identifier l'entité au niveau de la couche MAC. Un tel paramètre AID présente de nombreux avantages par rapport à une adresse MAC classique.

Le paramètre AID présente une taille de 2 octets au lieu de 6 octets pour une adresse MAC classique, ce qui facilite son insertion dans un entête PLCP dont le nombre de bits est restreint. Dans le cas où la taille de l'IED est de 2 octets, le paramètre AID complet peut être introduit dans l'entête PLCP alors que l'introduction d'une adresse MAC classique nécessite une réduction de la taille de cette dernière de 6 octets à 2 octets, cela correspond à une adresse MAC partielle. Cette réduction de l'adresse MAC a pour conséquence un risque de ne pouvoir identifier les entités de manière unique. En effet une même adresse MAC partielle peut identifier des entités différentes, ce qui peut entrainer la non mise en veille d'une entité concernée par cette mise en veille lorsque l'IED est construit au moyen d'une adresse MAC partielle.

Le paramètre AID est attribué à une entité par le point d'accès auquel elle est raccordée lors d'une procédure d'authentification de l'entité. Cela limite le risque de voir attribuer un même paramètre AID à deux entités différentes connectées à un même point d'accès.

Le paramètre BSSID présente également un intérêt car deux entités appartenant à deux BSS différents peuvent présenter le même paramètre AID ce qui introduit un risque de confusion des entités. C'est le cas, notamment, lorsque les deux BSS sont co-localisés et utilisent les même ressources spectrales (cas du overlapping BSS). Afin de préserver l'unicité de l'IED, l'IED est construit au moyen du paramètre AID et du paramètre BSSID sous sa forme complète ou partielle.

Ainsi, une telle mise en oeuvre de l'invention offre l'avantage de définir, au niveau de la couche PLCP, un identifiant unique d'entité destinataire et un identifiant indiquant une diffusion multipoints, par exemple de type « broadcast », selon la terminologie anglaise.

### 5.4 Insertion d'une information représentative de l'entité destinataire (IED) de la trame en couche physique

Certains modes de réalisation de l'invention comprennent la définition d'un nouveau champ, dédié à une IED, dans l'entête de la couche physique.

Par exemple, un nouveau champ de deux octets peut être inséré dans le champ SIGNAL (au niveau du champ « VHT_SIG» par exemple).

Dans d'autres modes de réalisation de l'invention, le codage de l'IED peut être placée dans un champ existant de la trame transmise sur la couche physique, utilisé à d'autres fins dans l'art antérieur, comme par exemple un champ Short Training Field (L-STF, HT-STF ou VHT-STF) de l'entête PLCP.

Ce mode de réalisation nécessite cependant de modifier le contenu de champs existants, comme par exemple L-STF ou HT-STF. De ce fait, les trames codées selon l'invention peuvent être décodées de la façon habituelle par des entités réceptrices sous réserve d'une mise à jour de celles-ci. Ce mode de réalisation implique donc que l'ensemble des entités recevant une trame modifiée selon l'invention soit mis à jour pour pouvoir implémenter l'invention.

Dans d'autres modes de réalisation de l'invention, le codage d'un champ existant peut être modifié pour transmettre, en parallèle à l'information originelle (ou « legacy ») déjà contenue dans le champ, l'identifiant du destinataire. Ceci peut par exemple être réalisé par un codage orthogonal de l'entête PLCP.

Ainsi, par exemple un champ déjà existant comme le champ SIGNAL peut être utilisé en passant d'un codage BPSK (de l'anglais « Binary Phase Shift Keying ») en QPSK (de l'anglais « Quadrature Phase Shift Keying ») pour les entités qui ne sont pas en limite de couverture.

En effet, la modulation QPSK permet de transmettre deux fois plus d'information que la modulation BPSK puisqu'elle permet de coder l'information sur l'axe I et sur l'axe Q au lieu d'un codage sur un seul axe. Cette technique induit cependant une perte de puissance qui, même si elle reste relativement faible, réduit légèrement la qualité de la réception. Aussi, ces modes de réalisation sont plus adaptés à des transmissions vers des entités (terminaux ou points d'accès) qui ne sont pas situés en limite de couverture.

Par exemple, les informations classiques et normalisées du champ HT-SIG sont codées sur l'axe Q et celles correspondant à l'identification de l'entité destinataire selon l'invention sont codées sur l'axe I, ou bien les informations classiques et normalisées du champ L-SIG sont codées sur l'axe I et celles correspondant à l'identification de l'entité destinataire sont codées sur l'axe Q.

Ces modes de réalisation offrent l'avantage de permettre un décodage d'une trame codée selon l'invention par une entité réceptrice n'implémentant pas l'invention sans qu'il soit nécessaire de procéder à une quelconque modification de celle-ci. En effet, les seuils de décision restant les mêmes, une entité conforme aux techniques de l'art antérieur et n'implémentant pas l'invention, ne détecte pas le changement et peut décoder les données originelles (ou « legacy ») comme précédemment, sans être perturbée par la présence du champ indiquant l'identifiant du destinataire.

Ainsi, les modes de réalisation de l'invention dans lesquels l'information d'identification est codée sur un champ existant de l'entête (L-STF ou L-SIG), sont adaptés à toutes les transmissions, y compris dans un environnement avec coexistence entre une entité émettrice qui implémente l'invention et une entité réceptrice de l'art antérieur.

D'autres modes de réalisation, qui prévoient un codage orthogonal de l'information d'identification dans un nouveau champ (HT ou VHT), sont adaptées à des transmissions vers des entités réceptrices HT ou VHT implémentant l'invention.

Ainsi, selon certains modes de réalisation, l'invention comprend la définition d'un nouveau format de trames PLCP pour les données, comportant un codage d'un identifiant « quasi-unique » par entité via un champ dédié ou via un champ existant (HT_STF ou HT-SIG par exemple).

### 5.5 Description d'un mode de réalisation du procédé de mise en sommeil de l'invention

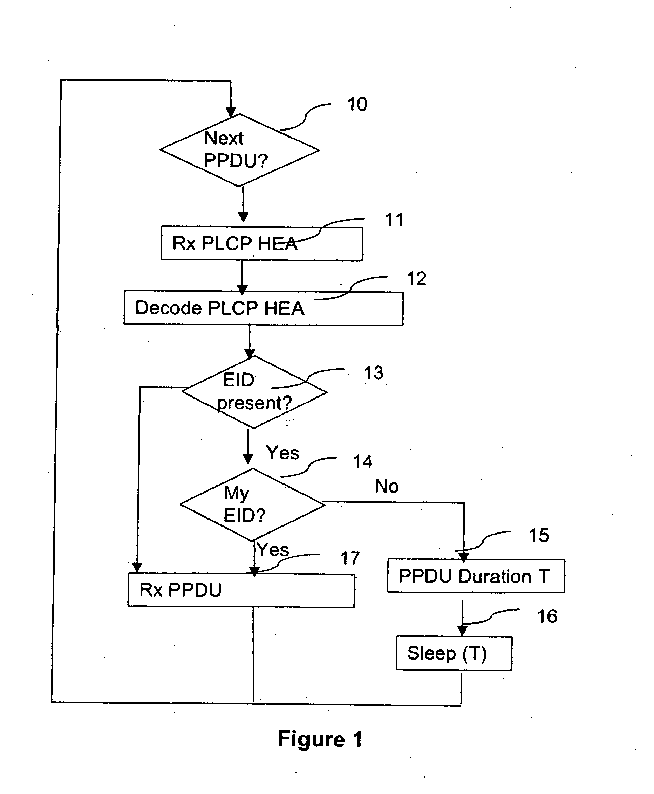

La figure 1 illustre les étapes du procédé de mise en sommeil selon l'invention, mis en oeuvre dans une entité d'un réseau de communication lors de la réception d'une trame de données de la couche physique.

Selon l'invention, lors de l'arrivée d'une nouvelle trame de données PPDU 10, le procédé comporte une étape de réception 11 de l'entête HEA de la trame de données. Dans le mode particulier illustré en figure 1, il s'agit de l'entête de la sous-couche PLCP de la trame en réception.

Cette étape de réception de l'entête HEA 11 est suivie par une étape de décodage de cet entête 12, au cours de laquelle une tentative d'extraction d'une information représentative IED de l'entité destinataire de la trame est effectuée.

Si la tentative d'extraction est fructueuse 13, c'est à dire si la trame en réception implémente l'invention et comprend l'IED de son destinataire, le procédé comprend ensuite une étape de comparaison 14 de l'IED reçue à l'IED associée à l'entité de communication réceptrice.

En effet, si l'entité réceptrice implémente l'invention et que le signal transmis a également été modifié suivant l'invention, elle dispose de l'identifiant IED du destinataire en fin de réception de l'entête PLCP. En le comparant avec son propre identifiant IED, elle est capable de savoir si la transmission en cours est pour elle ou ne la concerne pas.

Ainsi, le mécanisme d'économie d'énergie selon l'invention offre l'avantage d'être activable dès la fin de réception de l'entête PLCP.

Si les IED sont différentes, l'entité réceptrice n'étant donc pas destinataire de la trame en réception, le procédé comprend une étape de calcul 15 de la durée T de réception de la trame de données PPDU en se basant sur des paramètres disponibles dans l'entête HEA comme la longueur et le débit.

Enfin, cette étape de calcul 15 est suivie par une étape de mise en sommeil 16 de l'entité de communication pendant la durée T déterminée. Dans un mode de réalisation particulier, l'entité de communication peut ne pas réaliser de mise en sommeil sur un critère de longueur de trame inférieure à un seuil pré-défini (par exemple 20 octets). Ce mode intermédiaire permet d'écouter des trames de contrôles très courtes, comme par exemple des trames de type RTS (de l'anglais Request To Send) ou CTS (de l'anglais Clear To Send), utiles notamment pour la mise à jour du NAV (de l'anglais Network Allocation Vector) en couche MAC et de l'ordre de 14 octets, et d'éviter une surconsommation d'énergie liée aux pics de courant générés lors des phases de transition. Ainsi, dans ce mode de réalisation spécifique de l'invention, le procédé de mise en sommeil comprend une étape de décision de la pertinence de la mise en sommeil en fonction de la longueur de la trame.

Si les IED sont identiques, ou si l'IED reçue correspond à un mode de transmission multi-point, ou si la trame en réception ne comporte d'IED permettant d'identifiant son destinataire, le procédé prévoit une dernière étape de réception 17 du reste de la trame de données PPDU.

### 5.4 Détermination du temps de mise en sommeil

Selon l'invention, lorsque les deux IED sont différents, le procédé comprend une étape de calcul de la durée de mise en sommeil, pendant laquelle elle est sûre de ne pas être concernée par la transmission en cours.

Dans un mode particulier de réalisation du procédé de l'invention, l'entité réceptrice utilise pour cela des informations relatives au débit et à la taille de la trame de données en réception par la couche physique, à partir desquels elle peut calculer la durée T de la transmission en cours. Notamment, dans un mode particulier de réalisation de l'invention, l'entité réceptrice se base sur la formule décrite dans la norme de couche physique qu'elle utilise. Ainsi, si la norme utilisée est la norme 802.1 la, l'entité réceptrice peut par exemple calculer la durée de transmission conformément au paragraphe 17.4.3 «OFDM TXTIME calculation » de cette norme.

Par exemple, dans un mode particulier de réalisation de l'invention, l'entité réceptrice peut utiliser des informations contenues elles aussi dans l'entête de la trame reçue par la couche physique, comme par exemple les champs PSF et PLW de l'entête PLCP, le champ PSF (PLCP_SIGNALING FIELD) désignant le débit en Mbit/s, et le champ « PLW (PSDU LENGTH WORD) » le nombre d'octets de la trame reçue.

Ce calcul est effectué systématiquement par l'entité réceptrice en fin de réception de l'entête PLCP.

Si la transmission en cours ne la concerne pas, l'entité réceptrice prend la décision de se mettre en sommeil pendant la durée T de la transmission à venir.

Ainsi, si l'on estime le temps de réception d'une trame de données en couche physique de l'ordre de 300 µs à 1 millisecondes et le temps de réception d'une première partie de l'entête de la couche physique, allant du début de l'entête au champ contenant l'identifiant du destinataire de la trame, de l'ordre de 30 à 40 micro secondes (soit donc de l'ordre du centième par rapport au temps de réception de la trame), on comprend que la définition d'un mode économie d'énergie en couche physique selon l'invention est plus efficace que les modes « power save » habituellement définit en couche MAC. Ainsi, l'invention permet, par rapport aux solutions de l'art antérieur, un gain de temps considérable pour détecter l'occupation du canal par d'autres utilisateurs et donc, en conséquence, une économie d'énergie très conséquente.

La consommation de courant d'un composant WIFI en mode réception de données est de l'ordre de 400mA, alors qu'en mode veille il est uniquement de l'ordre 40mA. En prenant une alimentation à 3.3V, on peut calculer l'économie en puissance. La puissance consommée diminue donc d'un facteur de 10, pour une trame de données reçue par la couche physique par une entité réceptrice. Plus l'environnement radio est occupé par des transmissions importantes, du fait du nombre important d'entités ou de flux de données importants, par exemple en cas de flux vidéo élevés), plus l'économie est importante. L'invention permet ainsi entre autre, de ne pas consommer d'énergie pour des transmissions liées à un autre BSS. Dans le mode de réalisation spécifique de l'invention où l'alimentation électrique du composant est coupée, l'économie d'énergie est encore plus importante puisque le composant d'émission/réception radio fréquence n'est pas du tout alimenté. Il ne consomme donc pas de courant.

Dans un autre mode particulier de mise en oeuvre de l'invention, le temps de mise en sommeil tient compte à la fois de la durée T de transmission de la trame et du temps écoulé pour acquitter cette trame. Ce mode de réalisation permet de prolonger la mise en sommeil jusqu'à la fin de la trame ACK suivante.

### 5.6 Effet de la mise en sommeil

Dans le mode particulier de réalisation de l'invention décrit ici, l'étape de mise en sommeil 16 de l'entité réceptrice est entièrement réalisée au niveau de la couche physique.

En effet, les informations déclenchant la mise en sommeil sont des informations contenues dans les entêtes de la couche physique, la couche MAC étant seulement informée que le canal est occupé pour une durée correspondant à la durée de transmission de la trame non destinée à l'entité réceptrice.

De plus, l'effet de la mise en sommeil de l'entité réceptrice peut fluctuer selon les implémentations de l'invention. En particulier, il peut dépendre de l'entité réceptrice : de son constructeur par exemple, mais également des fonctionnalités ou des capacités de l'entité réceptrice.

Par exemple, la mise en sommeil peut correspondre à une coupure de l'alimentation des composants Radio Fréquence et/ou à une coupure de la chaîne de réception et de transmission de la couche physique. Dans ce cas, la mise en sommeil correspond à une extinction d'un composant de l'entité réceptrice.

La mise en sommeil peut également correspondre à une extinction d'autres composants de l'entité réceptrice, qui sont plus ou moins liés au composant de réception des signaux de la communication sans fil.

Enfin la mise en sommeil peut entraîner l'extinction de tous les composants de l'entité, lorsque cette entité est par exemple en état de veille.

La mise en sommeil selon l'invention est intéressante par exemple dans le cas des terminaux qui sont inactifs. On sait que même quand un terminal est inactif (c'est-à-dire qu'il ne fait pas l'objet d'une utilisation) certains composants du terminal continuent tout de même à fonctionner. Parmi ces composants, on trouve notamment les composants d'émission/réception de signaux radio. Ainsi, bien qu'étant en état de veille, un terminal du type précédemment décrit consomme tout de même de l'énergie. La mise en sommeil selon l'invention permet d'économiser encore de l'énergie et donc de prolonger l'utilisation du terminal.

L'invention se distingue donc largement des techniques de l'art antérieur puisque la couche MAC n'est, selon l'invention, pas impliquée dans la décision de mise en sommeil, au lieu de commander le mécanisme d'économie d'énergie comme prévu par les techniques dites « power save » de l'art antérieur. De plus, l'objectif de invention est différent : l'idée n'est pas d'instaurer des phases de veille et d'activité programmées mais de se mettre en sommeil pendant une phase d'activité lorsque le canal est occupé par d'autres utilisateurs. En ce sens, la technique de mise en veille de l'invention est universelle car elle peut être utilisée par un point d'accès et par les entités, lors de toutes transmissions, et donc également pendant les phases de réveil des entités en mode « power save », selon les techniques de l'art antérieur.

### 5.7 Structure d'une entité de communication adaptée à la mise en oeuvre du procédé de mise en sommeil de l'invention

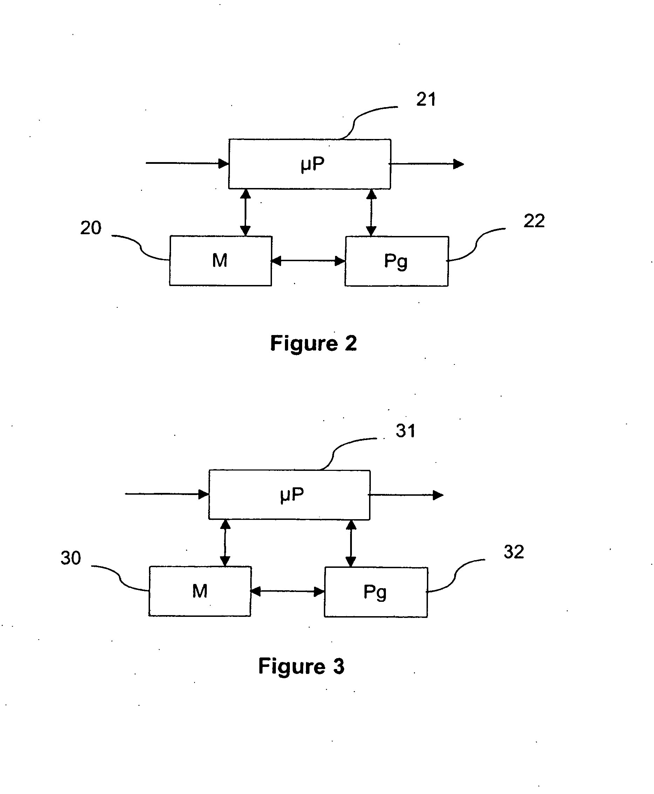

On présente, en relation avec la figure 2, la structure simplifiée d'une entité connectable à un réseau de communication sans fil comprenant une pluralité d'entités, ce réseau de communication étant organisé en une pluralité de couches de communication comprenant une couche physique, selon les modes de réalisation décrits ci-dessus.

Une telle entité comprend une mémoire 21 comprenant une mémoire tampon, une unité de traitement 22, équipée par exemple d'un microprocesseur µP, et pilotée par le programme d'ordinateur 23, mettant en oeuvre le procédé de mise en sommeil selon l'invention.

A l'initialisation, les instructions de code du programme d'ordinateur 23 sont par exemple chargées dans une mémoire RAM avant d'être exécutées par le processeur de l'unité de traitement 22.

L'unité de traitement 22 reçoit en entrée un entête d'une trame de données.

Le microprocesseur de l'unité de traitement 22 met en oeuvre les étapes du procédé de mise en sommeil décrit précédemment, selon les instructions du programme d'ordinateur 23. Pour cela, l'entité comprend, outre la mémoire tampon 31, au niveau d'une interface avec la couche physique :
- des moyens de réception d'un entête d'une trame de données ;
- des moyens de décodage de l'entête délivrant au moins une information représentative d'au moins une entité destinataire de ladite trame ;
- des moyens de mise en sommeil de l'entité réceptrice de l'entête lorsque l'information représentative de l'entité destinataire désigne une entité autre que l'entité réceptrice.

Ces moyens sont pilotés par le microprocesseur de l'unité de traitement 22.

### 5.7 Structure d'une entité de communication adaptée à la mise en oeuvre du procédé d'émission de l'invention

On présente finalement, en relation avec la figure 3, la structure simplifiée d'une entité connectable à un réseau de communication sans fil comprenant une pluralité d'entités, ce réseau de communication étant organisé en une pluralité de couches de communication comprenant une couche physique, selon les modes de réalisation décrits ci-dessus.

Une telle entité comprend une mémoire 31 comprenant une mémoire tampon, une unité de traitement 32, équipée par exemple d'un microprocesseur µP, et pilotée par le programme d'ordinateur 33, mettant en oeuvre le procédé de réception et/ou le procédé d'émission selon l'invention.

A l'initialisation, les instructions de code du programme d'ordinateur 33 sont par exemple chargées dans une mémoire RAM avant d'être exécutées par le processeur de l'unité de traitement 32.

Selon l'invention, le microprocesseur de l'unité de traitement 32 met en oeuvre les étapes du procédé d'émission décrit précédemment, selon les instructions du programme d'ordinateur 33. Pour cela, l'entité comprend, outre la mémoire tampon 31, au niveau d'une interface avec la couche physique :
- des moyens de construction d'une information représentative d'au moins une entité destinataire de la trame ;
- des moyens d'insertion de l'information représentative au sein de l'entête de la trame de données délivrant une trame modifiée ;
- des moyens d'émission de la trame de données modifiée sur le réseau de communication sous la forme d'un signal numérique.

Ces moyens sont pilotés par le microprocesseur de l'unité de traitement 32.

## Revendications

1. Procédé de mise en sommeil d'au moins un composant d'une entité d'un réseau de communication sans fil WLAN de type IEEE 802.11 comprenant une pluralité d'entités, ledit réseau de communication étant organisé en une pluralité de couches de communication comprenant une couche physique, ledit procédé comprenant, au niveau de ladite couche physique :
- une étape de réception (11) d'un entête d'une trame de données extraite d'un signal physique en cours de réception ;
- une étape de décodage (12) dudit entête délivrant au moins une information représentative d'au moins une entité destinataire de ladite trame construite à partir d'au moins un paramètre AID de la couche de contrôle d'accès au support physique ;
- une étape de mise en sommeil (16) d'au moins un composant de ladite entité réceptrice dudit entête lorsque l'information représentative de ladite entité destinataire désigne une entité autre que ladite entité réceptrice,
ledit procédé étant **caractérisé en ce que** ladite étape de mise en sommeil (16) comprend une étape d'extinction d'au moins un composant de ladite entité.

2. Procédé selon la revendication 1, **caractérisé en ce qu'**il comprend en outre une étape de calcul d'une durée de mise en sommeil en fonction d'au moins une information représentative d'un débit de transmission et d'au moins une information représentative d'un volume de données de ladite trame de données de la couche physique.

3. Procédé selon la revendication 1, **caractérisé en ce que** ladite étape d'extinction comprend une étape de coupure d'une alimentation électrique d'au moins un composant radio fréquence de ladite entité.

4. Procédé selon la revendication 1, **caractérisé en ce que** ladite étape d'extinction comprend une étape de coupure d'une alimentation électrique d'une chaîne de réception et ou transmission de données de la couche physique.

5. Procédé d'émission d'une trame de données comprenant un entête, par une entité émettrice d'un réseau de communication sans fil WLAN de type IEEE 802.11 comprenant une pluralité d'entités, ledit réseau de communication étant organisé en une pluralité de couches de communication comprenant une couche physique, comprenant une étape de construction de ladite trame de données,
procédé **caractérisé en ce qu'**il comprend, au niveau de ladite couche physique :
- une étape de construction d'une information représentative d'au moins une entité destinataire de ladite trame à partir d'au moins un paramètre AID de la couche de contrôle d'accès au support physique ;
- une étape d'insertion de ladite information représentative au sein dudit entête de ladite trame de données, délivrant une trame modifiée ;
- une étape d'émission de ladite trame de données modifiée sur ledit réseau de communication sous la forme d'un signal numérique.

6. Procédé d'émission selon la revendication 5, **caractérisé en ce que** ladite information représentative d'au moins une entité destinataire de ladite trame est insérée dans un champ de signalisation dudit entête.

7. Procédé d'émission selon la revendication 5, **caractérisé en ce que** ladite étape d'insertion est réalisée par un codage orthogonal de ladite information représentative avec l'un des champs dudit entête de ladite trame de données.

8. Entité connectable à un réseau de communication sans fil WLAN de type IEEE 802.11 comprenant une pluralité d'entités, ledit réseau de communication étant organisé en une pluralité de couches de communication comprenant une couche physique,
ladite entité comprenant, au niveau d'une interface avec ladite couche physique :
- des moyens de réception d'un entête d'une trame de données ;
- des moyens de décodage dudit entête délivrant au moins une information représentative d'au moins une entité destinataire de ladite trame construite à partir d'au moins un paramètre AID de la couche de contrôle d'accès au support physique ;
- des moyens de mise en sommeil de ladite entité réceptrice dudit entête lorsque l'information représentative de ladite entité destinataire désigne une entité autre que ladite entité réceptrice,
ladite entité étant **caractérisée en ce que** lesdits moyens de mise en sommeil comprennent des moyens d'extinction d'au moins un composant de ladite entité.

9. Entité connectable à un réseau de communication sans fil WLAN de type IEEE 802.11 comprenant une pluralité d'entités, ledit réseau de communication étant organisé en une pluralité de couches de communication comprenant une couche physique, comprenant des moyens de construction de ladite trame de données,
entité **caractérisée en ce qu'**elle comprend, au niveau d'une interface avec ladite couche physique:
- des moyens de construction d'une information représentative d'au moins une entité destinataire de ladite trame à partir d'au moins un paramètre AID de la couche de contrôle d'accès au support physique ;
- des moyens d'insertion de ladite information représentative au sein dudit entête de ladite trame de données délivrant une trame modifiée ;
- des moyens d'émission de ladite trame de données modifiée sur ledit réseau de communication sous la forme d'un signal numérique.

10. Signal représentatif d'une trame de données émise sur la couche physique d'un réseau de communication sans fil WLAN de type IEEE 802.11, ladite trame comprenant un entête,
signal **caractérisé en ce qu'**il comprend, au sein dudit entête à destination d'un composant de traitement du signal de ladite couche physique, une information représentative d'au moins une entité destinataire de ladite trame, construite à partir d'au moins un paramètre AID de la couche de contrôle d'accès au support physique .

11. Programme d'ordinateur **caractérisé en ce qu'**il comprend des instructions de code de programme pour la mise en oeuvre du procédé de mise en sommeil selon l'une quelconque des revendications 1 à 4 lorsque ce programme est exécuté par un processeur.

12. Programme d'ordinateur **caractérisé en ce qu'**il comprend des instructions de code de programme pour la mise en oeuvre du procédé d'émission selon l'une quelconque des revendications 5 à 7 lorsque ce programme est exécuté par un processeur.

## Patentansprüche

1. Verfahren, um wenigstens eine Komponente einer Entität eines drahtlosen Kommunikationsnetzes, WLAN, des Typs IEEE 802.11, das mehrere Entitäten enthält, in einen Ruhezustand zu versetzen, wobei das Kommunikationsnetz in mehreren Kommunikationsschichten, die eine physikalische Schicht umfassen, organisiert ist,
wobei das Verfahren auf Höhe der physikalischen Schicht Folgendes umfasst:
- einen Schritt (11) zum Empfangen eines Kopfsatzes eines Datenrahmens, der während des Empfangs aus einem physikalischen Signal extrahiert wird;
- einen Schritt (12) des Decodierens des Kopfsatzes, der wenigstens Informationen ergibt, die wenigstens eine Zielentität des Rahmens repräsentieren, das aus wenigstens einem Parameter AID der Schicht für die Steuerung des Zugriffs auf den physikalischen Träger konstruiert ist;
- einen Schritt (16) des Versetzens in den Ruhezustand wenigstens einer Komponente der den Kopfsatz empfangenden Entität, wenn die die Zielentität repräsentierenden Informationen eine Entität bezeichnen, die von der empfangenden Entität verschieden ist,
wobei das Verfahren **dadurch gekennzeichnet ist, dass** der Schritt (16) des Versetzens in den Ruhezustand einen Schritt des Abschaltens wenigstens einer Komponente der Entität umfasst.

2. Verfahren nach Anspruch 1, **dadurch gekennzeichnet, dass** es außerdem einen Schritt des Berechnens einer Dauer des Versetzens in den Ruhezustand als Funktion wenigstens einer Information, die einen Übertragungsdurchsatz repräsentiert, und wenigstens einer Information, die ein Datenvolumen des Datenrahmens der physikalischen Schicht repräsentiert, umfasst.

3. Verfahren nach Anspruch 1, **dadurch gekennzeichnet, dass** der Abschaltschritt einen Schritt des Unterbrechens einer Stromversorgung für wenigstens eine Hochfrequenzkomponente der Entität umfasst.

4. Verfahren nach Anspruch 1, **dadurch gekennzeichnet, dass** der Abschaltschritt einen Schritt des Unterbrechens einer Stromversorgung einer Empfangs- oder Sendekette von Daten der physikalischen Schicht umfasst.

5. Verfahren zum Senden eines Datenrahmens, der einen Kopfsatz enthält, durch eine sendende Entität eines drahtlosen Kommunikationsnetzes WLAN des Typs IEEE 802.11, das mehrere Entitäten umfasst, wobei das Kommunikationsnetz in mehreren Kommunikationsschichten, die eine physikalische Schicht umfassen, organisiert ist, das einen Schritt des Konstruierens des Datenrahmens umfasst,
wobei das Verfahren **dadurch gekennzeichnet ist, dass** es auf Höhe der physikalischen Schicht Folgendes umfasst:
- einen Schritt des Konstruierens einer Information, die wenigstens eine Zielentität des Rahmens repräsentiert, wenigstens anhand eines Parameters AID der Schicht für die Steuerung des Zugriffs auf den physikalischen Träger;
- einen Schritt des Einfügens der repräsentativen Information in den Kopfsatz des Datenrahmens, was einen modifizierten Rahmen ergibt;
- einen Schritt des Sendens des modifizierten Datenrahmens auf dem Kommunikationsnetz in Form eines digitalen Signals.

6. Sendeverfahren nach Anspruch 5, **dadurch gekennzeichnet, dass** die Information, die wenigstens eine Zielentität des Rahmens repräsentiert, in ein Signalgebungsfeld des Kopfsatzes eingefügt wird.

7. Sendeverfahren nach Anspruch 5, **dadurch gekennzeichnet, dass** der Einfügungsschritt durch eine orthogonale Codierung der repräsentativen Information mit einem der Felder des Kopfsatzes des Datenrahmens verwirklicht wird.

8. Entität, die an ein drahtloses Kommunikationsnetz WLAN des Typs IEEE 802.11, das mehrere Entitäten umfasst, anschließbar ist, wobei das Kommunikationsnetz in mehreren Kommunikationsschichten, die eine physikalische Schicht umfassen, organisiert ist,
wobei die Entität auf Höhe einer Schnittstelle mit der physikalischen Schicht Folgendes umfasst:
- Mittel zum Empfangen eines Kopfsatzes eines Datenrahmens;
- Mittel zum Decodieren des Kopfsatzes, was wenigstens eine Information ergibt, die wenigstens eine Zielentität des Rahmens repräsentiert, der anhand wenigstens eines Parameters AID der Schicht für die Steuerung des Zugriffs auf den physikalischen Träger konstruiert ist;
- Mittel zum Versetzen in den Ruhezustand der den Kopfsatz empfangenden Entität, wenn die die Zielentität repräsentierende Information eine Entität bezeichnet, die von der empfangenden Entität verschieden ist,
wobei die Entität **dadurch gekennzeichnet ist, dass** die Mittel zum Versetzen in den Ruhezustand Mittel zum Abschalten wenigstens einer Komponente der Entität umfassen.

9. Entität, die an ein drahtloses Kommunikationsnetz WLAN des Typs IEEE 802.11, das mehrere Entitäten umfasst, anschließbar ist, wobei das Kommunikationsnetz in mehreren Kommunikationsschichten, die eine physikalische Schicht umfassen, organisiert ist, wobei ein Mittel zum Konstruieren des Datenrahmens vorgesehen ist,
wobei die Entität **dadurch gekennzeichnet ist, dass** sie auf Höhe einer Schnittstelle mit der physikalischen Schicht Folgendes umfasst:
- Mittel zum Konstruieren einer Information, die wenigstens eine Zielentität des Rahmens repräsentiert, anhand wenigstens eines Parameters AID der Schicht für die Steuerung des Zugriffs auf den physikalischen Träger;
- Mittel zum Einfügen der repräsentativen Information in den Kopfsatz des Datenrahmens, was einen modifizierten Rahmen ergibt;
- Mittel zum Senden des modifizierten Datenrahmens auf dem Kommunikationsnetz in Form eines digitalen Signals.

10. Signal, das einen Datenrahmen repräsentiert und das auf der physikalischen Schicht eines drahtlosen Kommunikationsnetzes WLAN des Typs IEEE 802.11 gesendet wird, wobei der Rahmen einen Kopfsatz umfasst,
wobei das Signal **dadurch gekennzeichnet ist, dass** es in dem Kopfsatz, der an eine Signalverarbeitungskomponente der physikalischen Schicht adressiert ist, eine Information enthält, die wenigstens eine Zielentität des Rahmens repräsentiert und die wenigstens anhand eines Parameters AID der Schicht für die Steuerung des Zugriffs auf den physikalischen Träger konstruiert ist.

11. Computerprogramm, **dadurch gekennzeichnet, dass** es Programmcodebefehle für die Ausführung des Verfahrens zum Versetzen in den Ruhezustand nach einem der Ansprüche 1 bis 4, wenn dieses Programm von einem Prozessor ausgeführt wird, umfasst.

12. Computerprogramm, **dadurch gekennzeichnet, dass** es Programmcodebefehle für die Ausführung des Sendeverfahrens nach einem der Ansprüche 5 bis 7, wenn dieses Programm von einem Prozessor ausgeführt wird, umfasst.

## Claims

1. Method for deactivating at least one component of an entity of a WLAN wireless communication network of IEEE 802.11 type comprising a plurality of entities, said communication network being organized into a plurality of communication layers comprising a physical layer,
said method comprising, at the level of said physical layer:
- a step of receiving (11) a header of a data frame extracted from a physical signal in the process of being received;
- a step of decoding (12) said header yielding at least one item of information representing at least one destination entity of said frame, constructed from at least one AID parameter of the physical medium access control layer;
- a step of deactivating (16) at least one component of said receiver entity of said header when the item of information representing said destination entity designates an entity other than said receiver entity,
said method being **characterized in that** said deactivating step (16) comprises a step of switching off at least one component of said entity.

2. Method according to Claim 1, **characterized in that** it furthermore comprises a step of computing a deactivation time as a function of at least one item of information representing a transmission rate and of at least one item of information representing a volume of data from said data frame of the physical layer.

3. Method according to Claim 1, **characterized in that** said switching-off step comprises a step of disconnecting a power supply of at least one radio frequency component of said entity.

4. Method according to Claim 1, **characterized in that** said switching-off step comprises a step of disconnecting a power supply of a chain for receiving and/or transmitting data of the physical layer.

5. Method for emitting a data frame comprising a header, by an emitter entity of a WLAN wireless communication network of IEEE 802.11 type comprising a plurality of entities, said communication network being organized into a plurality of communication layers comprising a physical layer, comprising a step of constructing said data frame,
method **characterized in that** it comprises, at the level of said physical layer:
- a step of constructing an item of information representing at least one destination entity of said frame from at least one AID parameter of the physical medium access control layer;
- a step of inserting said representative item of information into said header of said data frame, yielding a modified frame;
- a step of emitting said modified data frame over said communication network in the form of a digital signal.

6. Emitting method according to Claim 5, **characterized in that** said item of information representing at least one destination entity of said frame is inserted into a signalling field of said header.

7. Emitting method according to Claim 5, **characterized in that** said inserting step is performed by orthogonal coding of said representative item of information with one of the fields of said header of said data frame.

8. Entity that can be connected to a WLAN wireless communication network of IEEE 802.11 type comprising a plurality of entities, said communication network being organized into a plurality of communication layers comprising a physical layer, said entity comprising, at the level of an interface with said physical layer:
- means for receiving a header of a data frame;
- means for decoding said header yielding at least one item of information representing at least one destination entity of said frame, constructed from at least one AID parameter of the physical medium access control layer;
- means for deactivating said receiver entity of said header when the item of information representing said destination entity designates an entity other than said receiver entity,
said entity being **characterized in that** said deactivating means comprise means for switching off at least one component of said entity.

9. Entity that can be connected to a WLAN wireless communication network of IEEE 802.11 type comprising a plurality of entities, said communication network being organized into a plurality of communication layers comprising a physical layer, comprising means for constructing said data frame,
entity **characterized in that** it comprises, at the level of an interface with said physical layer:
- means for constructing an item of information representing at least one destination entity of said frame from at least one AID parameter of the physical medium access control layer;
- means for inserting said representative item of information into said header of said data frame yielding a modified frame;
- means for emitting said modified data frame over said communication network in the form of a digital signal.

10. Signal representing a data frame emitted over the physical layer of a WLAN wireless communication network of IEEE 802.11 type, said frame comprising a header,
signal **characterized in that** it comprises, inside said header intended for a signal processing component of said physical layer, an item of information representing at least one destination entity of said frame, constructed from at least one AID parameter of the physical medium access control layer.

11. Computer program **characterized in that** it comprises program code instructions for implementing the deactivating method according to any one of Claims 1 to 4 when this program is executed by a processor.

12. Computer program **characterized in that** it comprises program code instructions for implementing the emitting method according to any one of Claims 5 to 7 when this program is executed by a processor.
